# EUROPEAN PATENT SPECIFICATION

(11) **EP 4 167 648 B1**
(45) Date of publication and mention of the grant of the patent: **18.02.2026**
(21) Application number: 22200896.3
(22) Date of filing: 11.10.2022
(51) Int. Cl.: H04W 48/12, H04W 76/15, H04W 84/12

(54) **LINK AVAILABILITY INDICATION FOR NON-PRIMARY LINK OF NSTR (NON-SIMULTANEOUS TRANSMIT AND RECEIVE) LINK PAIR IN NSTR AP MLD (ACCESS POINT MULTI-LINK DEVICE)**
VERBINDUNGSVERFÜGBARKEITSANZEIGE FÜR NICHTPRIMÄRE VERBINDUNG EINES NSTR (NICHTSIMULTANES SENDEN UND EMPFANGEN) VERBINDUNGSPAARES IN NSTR-AP MLD (ZUGANGSPUNKT-MULTILINK-VORRICHTUNG)
INDICATION DE DISPONIBILITÉ DE LIAISON POUR LIAISON NON PRIMAIRE DE PAIRE DE LIAISONS NSTR (TRANSMIT ET RÉCEPTION NON SIMULTANÉES) DANS UN AP MLD DE NSTR (DISPOSITIF À LIAISONS MULTIPLES DE POINT D'ACCÈS)

(30) Priority: 12.10.2021 US 202163254576 P; 21.10.2021 US 202163270085 P; 18.11.2021 US 202163280631 P; 17.12.2021 US 202163290740 P; 20.09.2022 US 202217948451
(43) Date of publication of application: 19.04.2023
(73) Proprietor: MediaTek Singapore Pte. Ltd., Singapore 138628 (SG)
(72) Inventor: LU, Kai Ying, San Jose, 95134 (US); YEE, James Chih-Shi, San Jose, 95134 (US); SEOK, Yongho, San Jose, 95134 (US)
(74) Representative: Hoefer & Partner Patentanwälte mbB

(56) References cited:
- US-A1- 2021 212 156
- LAURENT CARIOU (INTEL): "resolutions for CC34 CIDs for channel switching quieting", vol. 802.11 EHT; 802.11be, 23 March 2021 (2021-03-23), pages 1 - 11, XP068179434, Retrieved from the Internet <URL:https://mentor.ieee.org/802.11/dcn/21/11-21-0481-00-00be-resolutions-for-cc34-cids-for-channel-switching-quieting.docx> [retrieved on 20210323]
- ALFRED ASTERJADHI (QUALCOMM INC): "MAC-CR to MR Comments", vol. 802.11 EHT; 802.11be, 14 July 2021 (2021-07-14), pages 1 - 52, XP068182489, Retrieved from the Internet <URL:https://mentor.ieee.org/802.11/dcn/21/11-21-0915-00-00be-mac-cr-to-mr-comments.docx> [retrieved on 20210714]
- ARIK KLEIN (HUAWEI): "CC36-Resolution-for-CID-5154", vol. 802.11 EHT; 802.11be, no. 6, 16 February 2022 (2022-02-16), pages 1 - 10, XP068189307, Retrieved from the Internet <URL:https://mentor.ieee.org/802.11/dcn/21/11-21-1327-06-00be-cc36-resolution-for-cid-5154.docx> [retrieved on 20220216]

## Description

### CROSS REFERENCE TO RELATED PATENT APPLICATION(S)

The present disclosure is part of a non-provisional patent application claiming the priority benefit of U.S. Provisional Patent Application Nos. 63/254,576, 63/270,085, 63/280,631 and 63/290,740, filed 12 October 2021, 21 October 2021, 18 November 2021 and 17 December 2021, respectively.

### TECHNICAL FIELD

The present disclosure is generally related to wireless communications and, more particularly, to link unavailability (or availability) indication for any link (for example, a non-primary link) in wireless communications.

### BACKGROUND

Unless otherwise indicated herein, approaches described in this section are not prior art to the claims listed below and are not admitted as prior art by inclusion in this section.

In wireless communications under the Institute of Electrical and Electronics Engineers (IEEE) 802.11 standards, a multi-link device (MLD) that supports multi-link operation but has an in-device coexistence (IDC) interference when the two links are close to each other. Thus, the MLD operating on two links with IDC interference cannot support simultaneous transmission and reception at a time on both of the links. In such cases, the two links are referred to as a non-simultaneous-transmission-and-reception (NSTR) link pair and the MLD is referred to as an NSTR MLD. An access point (AP) MLD that has IDC interference operating on an NSTR link pair of links is referred to as an NSTR AP MLD. In operation, the NSTR AP MLD can designate one link of the NSTR link pair as a primary link while the other link of the NSTR link pair is designated as a non-primary link or a secondary link. The NSTR AP MLD can transmit Beacon frames and Probe Response frames only on the primary link but not on the non-primary link.

However, as it is required that an NSTR AP MLD not to transmit Beacon frames and Probe Response frames on the non-primary link of the NSTR link pair, it is possible that the non-primary link becomes unavailable due to channel measurement, co-existence requirements, peer-to-peer transmission or power-save reasons. As such, one issue that needs to be addressed pertains to how to indicate the unavailability of a link (for example, the non-primary link) under the condition that no Beacon frame, Probe Response frame or other management frames are allowed to be transmitted on the link (e.g., the non-primary link). Therefore, there is a need for a solution of link unavailability (or availability) indication for a link in wireless communications to address aforementioned issues.

US 2021/0212156 A2 discloses a method of enabling and disabling of links in a multi-link communication system. IEEE 802.11-20/0481r0 discusses channel switching.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to link availability indication for a non-primary link in wireless communications.

Under various proposed schemes in accordance with the present disclosure, it is believed that aforementioned issue may be addressed or otherwise alleviated.

Methods and apparatus according to the invention are defined in the independent claims.

The dependent claims define preferred embodiments of the invention.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, WiMax, Bluetooth, ZigBee, 5th Generation (5G)/New Radio (NR), Long-Term Evolution (LTE), LTE-Advanced, LTE-Advanced Pro, Internet-of-Things (IoT), Industrial loT (IIoT) and narrowband loT (NB-loT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example scenario in accordance with the present disclosure.
FIG. 3 is a diagram of an example scenario in accordance with the present disclosure.
FIG. 4 is a diagram of an example design in accordance with the present disclosure.
FIG. 5 is a diagram of an example design in accordance with the present disclosure.
FIG. 6 is a block diagram of an example communication system in accordance with an implementation of the present disclosure.
FIG. 7 is a flowchart of an example process in accordance with an implementation of the present disclosure.
FIG. 8 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to link availability indication for a non-primary link in wireless communications. According to the present disclosure, a number of possible solutions may be implemented separately or jointly. That is, although these possible solutions may be described below separately, two or more of these possible solutions may be implemented in one combination or another.

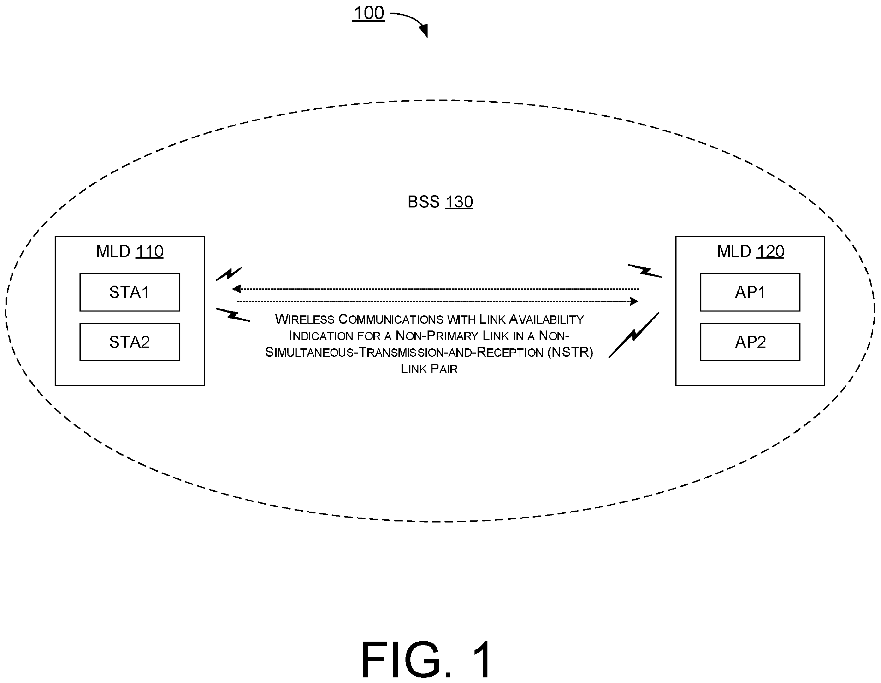

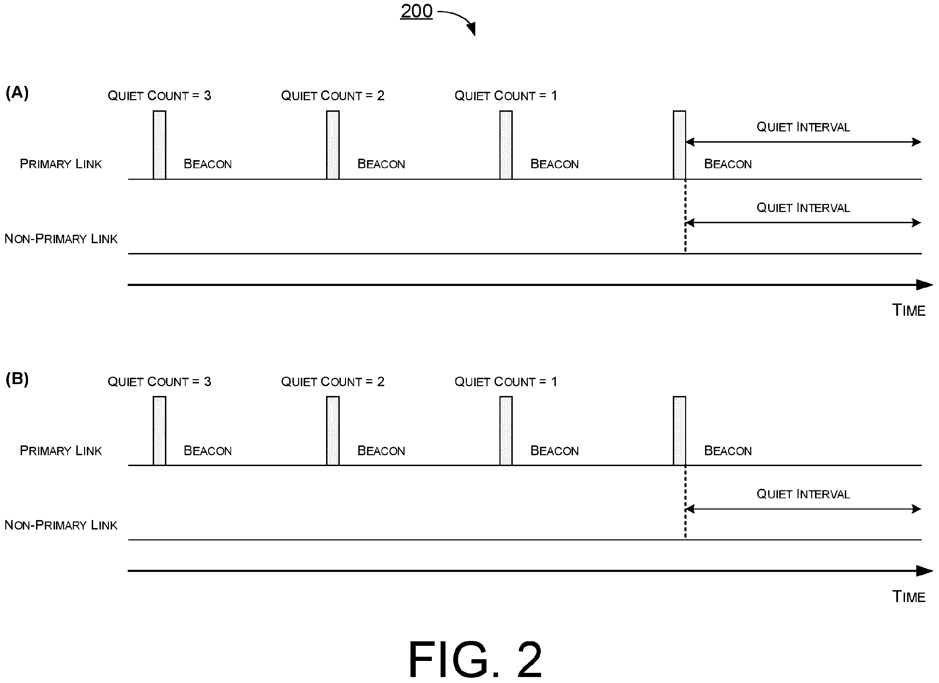

FIG. 1 illustrates an example network environment 100 in which various solutions and schemes in accordance with the present disclosure may be implemented. FIG. 2 ~ FIG. 8 illustrate examples of implementation of various proposed schemes in network environment 100 in accordance with the present disclosure. The following description of various proposed schemes is provided with reference to FIG. 1 ~ FIG. 8.

Referring to FIG. 1, network environment 100 may involve at least an MLD 110 and an MLD 120 communicating wirelessly with each other in a basic service set (BSS) 130 in accordance with one or more IEEE 802.11 standards (e.g., IEEE 802.11be and beyond). Each STA of multiple STAs (denoted as "STA1" and "STA2" in FIG. 1) affiliated with MLD 110 may function as a non-AP STA, and each STA of multiple STAs (denoted as "AP1" and "AP2" in FIG. 1) affiliated with MLD 120 may function as an AP STA. That is, MLD 110 may be a non-AP MLD operating on multiple links comprising at least two links, such as a NSTR link pair having a primary link and a non-primary link, and MLD 120 may be an AP MLD (such as a common AP MLD or NSTR non-AP MLD) operating on the NSTR link pair, for example. Moreover, each of MLD 110 and MLD 120 may be configured to utilize link unavailability indication for a link, such as a non-primary link, in wireless communications in accordance with various proposed schemes, as described below. It is noteworthy that, while the various proposed schemes may be individually or separately described below, in actual implementations each of the proposed schemes may be utilized individually or separately. Alternatively, some or all of the proposed schemes may be utilized jointly.

In an embodiment of the present disclosure, an AP MLD may operate on at least two links. Under a proposed scheme in accordance with the present disclosure with respect to unavailability indication of a non-primary link among the at least two links, an AP (e.g., a reporting AP) affiliated with the AP MLD (e.g., NSTR AP MLD) and operating on a link that is not a non-primary link may indicate that the non-primary link is not available in reference to a Target Beacon Transmission Time (TBTT) of the reporting AP or another AP that is affiliated with the same AP MLD and operating on the primary link (or the reporting AP if the reporting AP is operating on the primary link). It is understood that, as an AP is operating on the non-primary link, indicating the AP is not available is equivalent to indicating the non-primary link is not available. In some embodiments of the present disclosure, the AP operating on the non-primary link is not available/quiet/disabled under at least one of the following conditions: absent of DL traffic, UL traffic being mapping to the non-primary link, or the Quiet information element (IE) of the AP on the non-primary link being carried in the Beacon frame or Probe Response frame. This indication may be provided through an IE (e.g., 'Unavailability/Quiet IE') carried in a Beacon frame or Probe Response frame transmitted by the reporting AP. For instance, the IE may be contained in a Per-STA profile sub-element corresponding to a neighbor AP (i.e., the AP on the non-primary link) that is affiliated with the same NSTR AP MLD as the reporting AP and operating on the non-primary link. The IE may not be present in any frame transmitted on the non-primary link. When an AP affiliated with an NSTR AP MLD and operating on the non-primary link is unavailable or is in a scheduled quiet interval (herein interchangeably referred to as being "quiet") or is disabled (e.g., due to no downlink or uplink traffic is mapping to the link on which such AP is operating and/or due to a Quiet element corresponding to such AP is carried in the Beacon frame or Probe Response frame), any AP affiliated with the same NSTR AP MLD (except the AP operating on the non-primary link) may carry the IE to indicate that the non-primary link is unavailable or is in a scheduled quiet interval or is disabled. Under the proposed scheme, the inclusion of the IE may be classified as a critical update. For instance, the BSS Parameter Change Count in a Common Info field of a Multi-Link element carried in the Beacon frames and/or Probe Response frames may be increased or incremented. For example, the non-primary link of an NSTR link pair may share a same TBTT value as the primary link of the NSTR link pair. For convenience of description, in the following embodiments, an exemplary embodiment of the multiple links an AP MLD operating on is a NSTR link pair, an exemplary embodiment of AP MLD is a NSTR AP MLD; meanwhile, one link in the multiple links is a primary link in the NSTR link pair, and another link in the multiple links is a non-primary link in the NSTR link pair, but not limited thereto. For example, in an embodiment, the multiple links can be STR link.

Under a proposed scheme in accordance with the present disclosure with respect to unavailability indication of a non-primary link, the IE may include at least one of a plurality of parameters corresponding to link unavailability/quiet indication. Such parameters may include, for example and without limitation, Count, Period, Duration, and Offset. Under the proposed scheme, the parameter of Count may be set to a number of TBTTs of the reporting AP until the beacon interval during which the next unavailability/quiet interval starts if the field is set to a value lower than or equal to 127. A value of 0 may indicate that the non-primary link unavailability/quiet interval occurs at any time after the Beacon frame is transmitted. The value in the Count field minus 127 is equal to the number of TBTTs of the reporting AP in the past to reach the beacon interval during which the ongoing unavailability/quiet interval started if the field is set to a value higher than 127. The parameter of Period may be set to a number of beacon intervals of the reporting AP between the start of regularly scheduled unavailability/quiet intervals. A value of 0 may indicate no periodic interval is defined. The parameter of Duration may be set to the duration or left time of the unavailability/quiet interval, expressed in Time Units (TUs), with one TU being 1024 microseconds. The parameter of Offset may be set to an offset value of the unavailability/quiet interval from the TBTT specified by the Count field, expressed in TUs. The value of the unavailability/quiet interval may be less than one beacon interval of the reporting AP.

As a first example of implementation of the above-described proposed scheme, an NSTR AP MLD operating on an NSTR link pair (e.g., a 5GHz primary link and a 6GHz non-primary link) may have a first AP (e.g., AP1) and a second AP (e.g., AP2) affiliated with the NSTR AP MLD operating on the primary link (5GHz) and the non-primary link (6GHz), respectively. When AP2 is unavailable or is in a scheduled quiet interval or is disabled, AP1 may indicate that AP2 is not available in reference to a TBTT of AP1 (which is the reporting AP as well as the AP that operates on the primary link) using an Unavailability/Quiet IE carried in a Beacon frame and/or Probe Response frame transmitted by AP1 on the primary link. AP1 may include the Unavailability/Quiet IE in a Per-STA profile sub-element corresponding to AP2, which is carried in a Multi-Link element in the Beacon frame and/or Probe Response frame transmitted by AP1. AP2 may not include the Unavailability/Quiet IE in any frame it transmits on the non-primary link. When the Multi-Link element is carried in the Unavailability/Quiet IE in the Beacon frame and/or Probe Response frame, the inclusion of the IE may be classified as a critical update. For instance, the BSS Parameter Change Count in the Common Info field of the Multi-Link element carried in the Beacon frames and/or Probe Response frames may be increased or incremented.

As a second example of implementation of the above-described proposed scheme, an AP MLD operating on an NSTR link pair (e.g., a 5GHz primary link and a 6GHz non-primary link) and a simultaneous-transmission-and-reception (STR) link (e.g., a 2.4GHz link) may have a first AP (e.g., AP1), a second AP (e.g., AP2) and a third AP (e.g., AP3) affiliated with the AP MLD operating on the STR link (2.4GHz), the primary link (5GHz) and the non-primary link (6GHz), respectively. When AP3 is unavailable or is in a scheduled quiet interval or is disabled, AP1 may indicate that that AP3 is not available in reference to a TBTT of the link of the reporting AP or the primary link (5GHz) using an Unavailability/Quiet IE carried in a Beacon frame and/or Probe Response frame transmitted by AP1 on the STR link (2.4GHz). Similarly, when AP3 is unavailable or is in a scheduled quiet interval or is disabled, AP2 may indicate that that AP3 is not available in reference to a TBTT of the link of the reporting AP or the primary link (5GHz) using an Unavailability/Quiet IE carried in a Beacon frame and/or Probe Response frame transmitted by AP2 on the primary link (5GHz). AP1 and AP2 may include the Unavailability/Quiet IE in a Per-STA profile sub-element corresponding to AP3, which is carried in a Multi-Link element in the Beacon frames and/or Probe Response frames transmitted by AP1 and AP2. AP3 may not include the Unavailability/Quiet IE in any frame it transmits on the non-primary link (6Ghz). The inclusion of the IE may be classified as a critical update. For instance, the BSS Parameter Change Count in the Common Info field of the Multi-Link element carried in the Beacon frames and/or Probe Response frames may be increased or incremented.

As a third example of implementation of the above-described proposed scheme, the IE may include at least one of a plurality of parameters corresponding to link unavailability/quiet indication. Such parameters may include, for example and without limitation, Count, Period, Duration, and Offset. Under the proposed scheme, the parameter of Count may be set to 3 TBTTs in reference to the TBTT of AP1 (which is on the primary link in the first example above) until end of the beacon interval of AP1 during which the next unavailability/quiet interval starts. The parameter of Period may be set to 0 to indicate that no periodic interval is defined. The parameter of Duration may be set to 1000 TUs (1 second) to indicate the duration of the unavailability/quiet interval. The parameter of Offset may be set to 50 TUs (50 milliseconds) to indicate the offset of the unavailability/quiet interval from the TBTT specified by the Count field.

As a fourth example of implementation of the above-described proposed scheme, the IE may include at least one of a plurality of parameters corresponding to link unavailability/quiet indication. Such parameters may include, for example and without limitation, Count, Period, Duration, and Offset. Under the proposed scheme, the parameter of Count may be set to 0 TBTT in reference to the TBTT of AP1 (which is on the primary link in the first example above) to indicate that the unavailability/quiet interval starts. The parameter of Period may be set to 0 to indicate that no periodic interval is defined. The parameter of Duration may be set to 1000 TUs (1 second) to indicate the time left of the unavailability/quiet interval. The parameter of Offset may be set to 50 TUs (50 milliseconds) to indicate the offset of the unavailability/quiet interval from the start of the current beacon interval of AP1.

As a fifth example of implementation of the above-described proposed scheme, the IE may include at least one of a plurality of parameters corresponding to link unavailability/quiet indication. Such parameters may include, for example and without limitation, Count, Period, Duration, and Offset. Under the proposed scheme, the parameter of Count may be set to 128 TBTTs (as the Count field minus 127 is equal to the number of TBTTs) in reference to the TBTT of AP1 (which is on the primary link in the first example above) in the past to reach the beacon interval during which the ongoing unavailability/quiet interval started. The parameter of Period may be set to 0 to indicate that no periodic interval is defined. The parameter of Duration may be set to 1000 TUs (1 second) to indicate the duration of the unavailability/quiet interval. The parameter of Offset may be set to 50 TUs (50 milliseconds) to indicate the offset of the unavailability/quiet interval from the TBTT specified by the Count field.

FIG. 2 illustrates an example scenario 200 of quiet interval scheduling for a non-primary link under a proposed scheme in accordance with the present disclosure. In scenario 200, an AP affiliated with an NSTR AP MLD and operating on a primary link of an NSTR link pair may schedule one or more quiet intervals for another AP affiliated with the NSTR AP MLD that is operating on a non-primary link of the NSTR link pair. For instance, referring to part (A) of FIG. 2, when an AP (e.g., AP1) affiliated with an NSTR AP MLD and operating on the primary link schedules one or more quiet intervals on the primary link by transmitting one or more Quiet elements carried in Beacon frames and/or Probe Response frames. Moreover, the same quiet interval(s) may be scheduled for another AP (e.g., AP2) affiliated with the same NSTR AP MLD that is operating on the non-primary link. Alternatively, referring to part (B) of FIG. 2, an AP (e.g., AP1) affiliated with an NSTR AP MLD and operating on the primary link may schedule quiet intervals only for the other AP (e.g., AP2) affiliated with the same NSTR AP MLD that is operating on the non-primary link by transmitting one or more Quiet elements carried in a Per-STA Profile sub-element corresponding to AP2 in a Basic Variant Multi-Link element in Beacon frames and/or Probe Response frames transmitted by AP1 on the primary link.

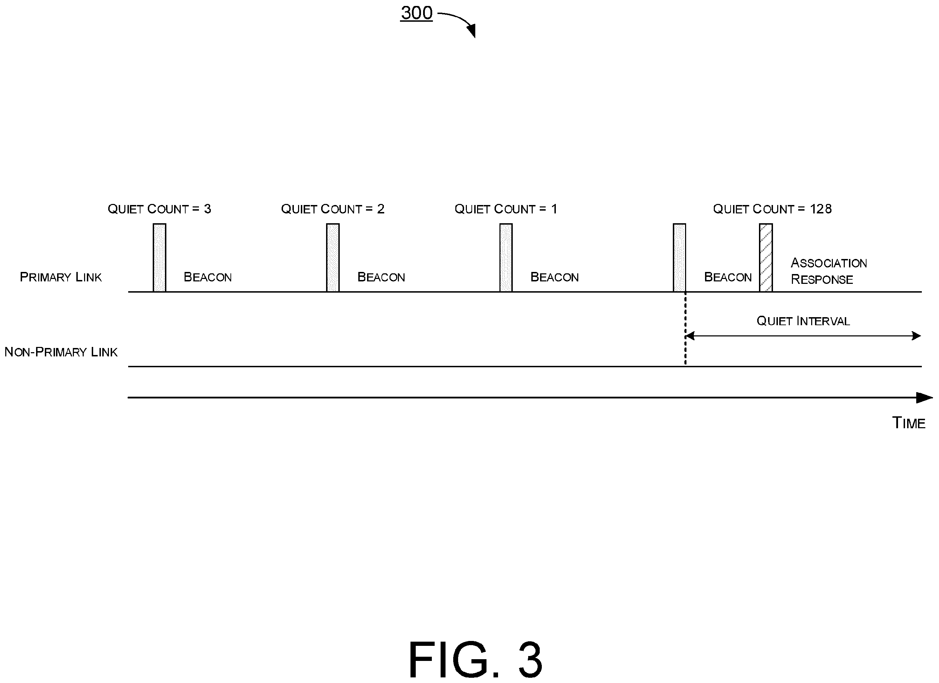

FIG. 3 illustrates an example scenario 300 of quiet interval scheduling for a non-primary link under a proposed scheme in accordance with the present disclosure. In scenario 300, the quiet intervals scheduled for an AP (e.g., AP2) affiliated with an NSTR AP MLD and operating on the non-primary link may be in reference to the most recent TBTT and beacon interval (BI) indicated in the corresponding element(s) of the reporting AP or another AP (e.g., AP1) affiliated with the same NSTR AP MLD and operating on the primary link. Moreover, AP2 may not transmit any Quiet element on the non-primary link. Furthermore, a STA affiliated with a non-AP MLD, which is capable of operating on the primary and non-primary links, may transmit a (Re-)Association Request frame to the AP (e.g., AP1) on the primary link, in order to perform multi-link setup. The multi-link setup may include both the primary link and the non-primary link. Since the (Re-)Association Response frame may be transmitted by AP1 on the primary link after the quiet interval has started on the non-primary link, AP1 on the primary link may include the Quiet element in the Per-STA Profile corresponding to AP2 on the non-primary link in the (Re-)Association Response frame it transmits. The value of the Quiet Count field of the Quiet element carried in the (Re-)Association Response frame may be set to 128 to indicate that the quiet interval on the non-primary link started in the beacon interval that occurred 1 TTBT in the past on the primary link.

Under a proposed scheme in accordance with the present disclosure with respect to link unavailability/disablement indication, an AP (reporting AP) affiliated with an NSTR AP MLD and operating on a link that is not a non-primary link may provide a link unavailability/quiet/disablement indication to indicate that the another AP (reported AP) affiliated with the same NSTR AP MLD that is operating on the non-primary link is unavailable or is in a scheduled quiet interval or is disabled through a Per-STA Profile sub-element corresponding to the reported AP. The Per-STA Profile sub-element may be included in a Multi-Link IE in the Beacon frame(s) and/or Probe Response frame(s) transmitted by the reporting AP. The link unavailability/quiet/disablement indication may include: (i) a link unavailability/disablement present indication, and (ii) link unavailability/quiet/disablement parameters. The link unavailability/disablement present indication may be carried in the STA Control field in the Per-STA Profile sub-element of the Multi-Link IE. The link unavailability/disablement parameters may be present when the link unavailability/disablement present indication is set to 1, and may be caried in the STA Info field in the Per-STA Profile sub-element of the Multi-Link IE. The link unavailability/quiet/disablement parameters corresponding to the reported AP on the non-primary link may be in reference to the most recent TBTT and BI indicated in the corresponding element(s) of the reporting AP that is not operating on the non-primary link.

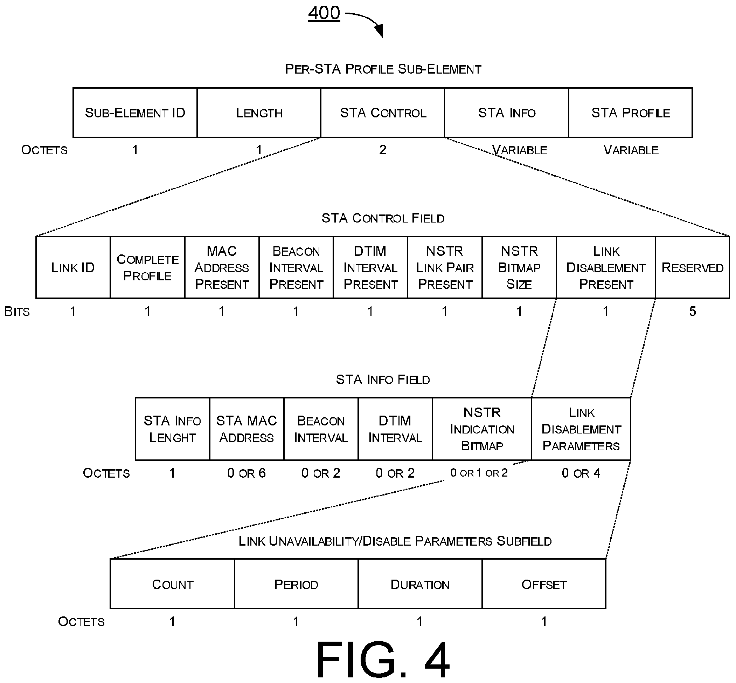

FIG. 4 illustrates an example design 400 of a link unavailability/disablement indication under a proposed scheme in accordance with the present disclosure. Referring to FIG. 4, in design 400, the link unavailability/quiet/disablement parameters may include, for example and without limitation, Count, Period, Duration, and Offset. The parameter of Count may be set to a number of TBTTs of the reporting AP until the beacon interval during which the link is unavailable or is in a scheduled quiet interval or is disabled. A value of 0 may indicate that the non-primary link unavailability/quiet/disablement occurs at any time after the Beacon frame is transmitted or has already occurred. The parameter of Period may be set to a number of beacon intervals of the reporting AP between the start of regularly scheduled unavailability/quiet/disablement intervals. A value of 0 may indicate no periodic interval is defined. The parameter of Duration may be set to the duration or left time of the unavailability/quiet/disablement interval, expressed in TUs. The parameter of Offset may be set to an offset value of the unavailability/quiet/disablement interval from the TBTT specified by the Count field, expressed in TUs. The value of the unavailability/quiet/disablement interval may be less than one beacon interval of the reporting AP.

Under a proposed scheme in accordance with the present disclosure with respect to link unavailability/disablement indication, the inclusion of the Per-STA Profile sub-element in the Multi-Link element of Beacon or Probe Response frames may be classified as a critical update. For instance, the BSS Parameter Change Count in the Common Info field of the Multi-Link element carried in the Beacon frames and/or Probe Response frames may be increased or incremented. Under the proposed scheme, an AP (reporting AP) affiliated with an NSTR AP MLD and operating on a link that is not a non-primary link may provide a link unavailability/quiet/disablement indication to indicate that the another AP (reported AP) affiliated with the same NSTR AP MLD that is operating on the non-primary link is unavailable or is in a scheduled quiet interval or is disabled through a Reduced Neighbor Report (RNR) element with the Neighbor AP Information field corresponding to the non-primary link. The RNR element may be included in the Beacon frame(s) and/or Probe Response frame(s) transmitted by the reporting AP.

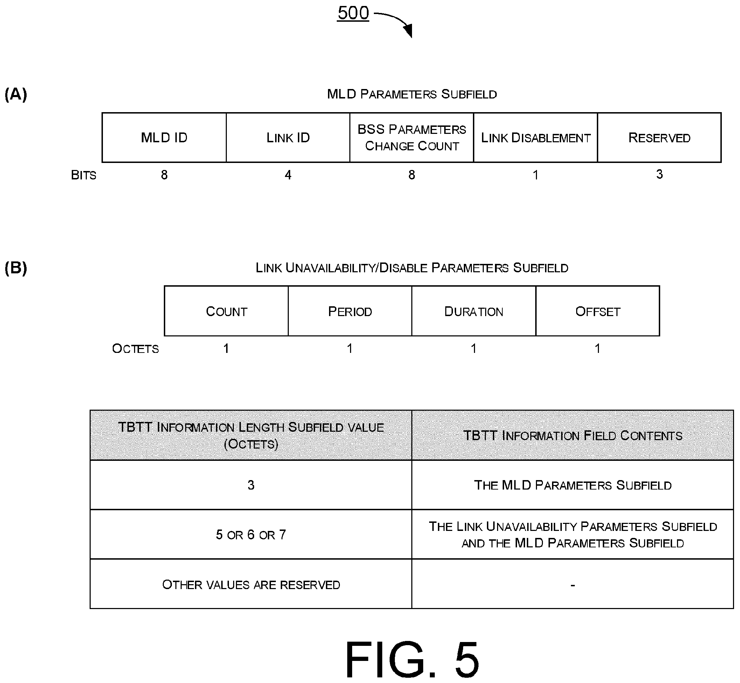

FIG. 5 illustrates an example design 500 of a link unavailability/disablement indication under a proposed scheme in accordance with the present disclosure. Under the proposed scheme, an MLD Parameters subfield of a TBTT Information field corresponding to a reported AP on a non-primary link may include the unavailability/quiet/disablement indication. Referring to part (A) of FIG. 5, a Link Disablement indication in the MLD Parameters subfield may be set to 1 when the link is unavailable or quiet or disabled, otherwise it may be set to 0. Modification of the Link Disablement indication may be classified as a critical update. Additionally, a BSS Parameter Change Count in the Common Info field of the Multi-Link element carried in a Beacon or Probe Response frame may be increased or incremented. On the other hand, a BSS Parameter Change Count in the MLD Parameters subfield may not be increased or incremented.

Under the proposed scheme, a reporting AP of an AP MLD may indicate that a reported AP is scheduled to be or is unavailable or quiet or disabled through the Per-STA Profile sub-element corresponding to a non-primary link associated with the reported AP. The indication may be included in a Multi-Link IE in the Beacon frame(s) and/or Probe Response frame(s) or multi-link Probe Response (Re-)Association Response frame(s) transmitted by the reporting AP. It is noteworthy that the various proposed schemes described above may be applied to a reported AP affiliated with an AP MLD.

Under the proposed scheme, a Link Unavailability/Disable Parameters Subfield may be included in the TBTT Information field of a Neighbor AP Information field in the RNR element. The Link Unavailability/Disable Parameters Subfield may include parameters such as, for example and without limitation, Count, Period, Duration, and Offset. The parameter of Count may be set to a number of TBTTs of the reporting AP until the beacon interval during which the link is unavailable or quiet or disabled. A value of 0 may indicate that the non-primary link unavailability/quiet/disablement occurs at any time after the Beacon frame is transmitted or has already occurred. The parameter of Period may be set to a number of beacon intervals of the reporting AP between the start of regularly scheduled unavailability/quiet/disablement intervals. A value of 0 may indicate no periodic interval is defined. The parameter of Duration may be set to the duration or left time of the unavailability/quiet/disablement interval, expressed in TUs. The parameter of Offset may be set to an offset value of the unavailability/quiet/disablement interval from the TBTT specified by the Count field, expressed in TUs. The value of the unavailability/quiet/disablement interval may be less than one beacon interval of the reporting AP.

Under the proposed scheme, referring to part (B) of FIG. 5, the TBTT Information field contents corresponding to a specified link (e.g., non-primary link) may include at least one of the following subfields: the Link Unavailability Parameters subfield and the MLD Parameters subfield. A value of the TBTT Information Length subfield may be the total length of the subfield(s) included. For example, a value of 5 (e.g., 5 octets) may indicate that the TBTT Information field contents include the MLD Parameters subfield and the Link Unavailability Parameters subfield which has the Count and Duration parameters. As another example, a value of 6 may indicate that the TBTT Information field contents include the MLD Parameters subfield and the Link Unavailability Parameters subfield which has the Count, Duration and Period parameters. As yet another example, a value of 7 may be used when all parameters of the Link Unavailability Parameters subfield are included therein.

Under the proposed scheme, in case that the reported AP (corresponding to a non-primary link) is scheduled to be or is not available or quiet or disabled, the reporting AP of an AP MLD may include the Link Unavailability Parameters subfield in the TBTT Information field corresponding to the reported AP in the RNR element in the Beacon frame(s) and/or Probe Response frame(s) transmitted by the reporting AP. Otherwise, the reporting AP may not include the Link Unavailability Parameters subfield in the TBTT Information field corresponding to the reported AP in the RNR element.

### Illustrative Implementations

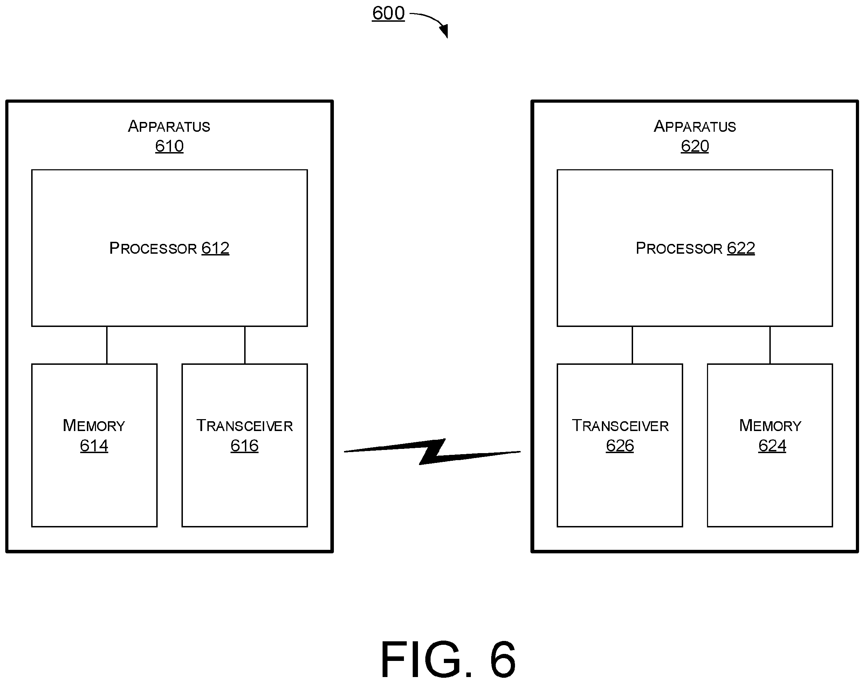

FIG. 6 illustrates an example system 600 having at least an example apparatus 610 and an example apparatus 620 in accordance with an implementation of the present disclosure. Each of apparatus 610 and apparatus 620 may perform various functions to implement schemes, techniques, processes and methods described herein pertaining to link availability indication for a non-primary link in wireless communications, including the various schemes described above with respect to various proposed designs, concepts, schemes, systems and methods described above as well as processes described below. For instance, apparatus 610 may be implemented in STA 110 and apparatus 620 may be implemented in STA 120, or vice versa.

Each of apparatus 610 and apparatus 620 may be a part of an electronic apparatus, which may be a non-AP MLD or an AP MLD, such as a portable or mobile apparatus, a wearable apparatus, a wireless communication apparatus or a computing apparatus. When implemented in a non-AP MLD, each of apparatus 610 and apparatus 620 may be implemented in a smartphone, a smart watch, a personal digital assistant, a digital camera, or a computing equipment such as a tablet computer, a laptop computer or a notebook computer. Each of apparatus 610 and apparatus 620 may also be a part of a machine type apparatus, which may be an loT apparatus such as an immobile or a stationary apparatus, a home apparatus, a wire communication apparatus or a computing apparatus. For instance, each of apparatus 610 and apparatus 620 may be implemented in a smart thermostat, a smart fridge, a smart door lock, a wireless speaker or a home control center. When implemented in or as a network apparatus, apparatus 610 and/or apparatus 620 may be implemented in a network node, such as an AP MLD in a WLAN.

In some implementations, each of apparatus 610 and apparatus 620 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 610 and apparatus 620 may be implemented in or as a non-AP MLD or an AP MLD. Each of apparatus 610 and apparatus 620 may include at least some of those components shown in FIG. 6 such as a processor 612 and a processor 622, respectively, for example. Each of apparatus 610 and apparatus 620 may further include one or more other components not pertinent to the proposed scheme of the present disclosure (e.g., internal power supply, display device and/or user interface device), and, thus, such component(s) of apparatus 610 and apparatus 620 are neither shown in FIG. 6 nor described below in the interest of simplicity and brevity.

In one aspect, processor 612 and processor 622 may be implemented in the form of one or more single-core processors, one or more multi-core processors, one or more RISC processors or one or more CISC processors. That is, even though a singular term "a processor" is used herein to refer to processor 612 and processor 622, processor 612 and processor 622 may include multiple processors in some implementations and a single processor in other implementations in accordance with the present disclosure. In another aspect, processor 612 and processor 622 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, processor 612 and processor 622 is a special-purpose machine specifically designed, arranged and configured to perform specific tasks including those pertaining to link availability indication for a non-primary link in wireless communications in accordance with various implementations of the present disclosure.

In some implementations, apparatus 610 may also include a transceiver 616 coupled to processor 612. Transceiver 616 may include a transmitter capable of wirelessly transmitting and a receiver capable of wirelessly receiving data. In some implementations, apparatus 620 may also include a transceiver 626 coupled to processor 622. Transceiver 626 may include a transmitter capable of wirelessly transmitting and a receiver capable of wirelessly receiving data.

In some implementations, apparatus 610 may further include a memory 614 coupled to processor 612 and capable of being accessed by processor 612 and storing data therein. In some implementations, apparatus 620 may further include a memory 624 coupled to processor 622 and capable of being accessed by processor 622 and storing data therein. Each of memory 614 and memory 624 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 614 and memory 624 may include a type of read-only memory (ROM) such as mask ROM, programmable ROM (PROM), erasable programmable ROM (EPROM) and/or electrically erasable programmable ROM (EEPROM). Alternatively, or additionally, each of memory 614 and memory 624 may include a type of non-volatile random-access memory (NVRAM) such as flash memory, solid-state memory, ferroelectric RAM (FeRAM), magnetoresistive RAM (MRAM) and/or phase-change memory.

Each of apparatus 610 and apparatus 620 may be a communication entity capable of communicating with each other using various proposed schemes in accordance with the present disclosure. For illustrative purposes and without limitation, a description of capabilities of apparatus 610, as MLD 110 (e.g., a non-AP MLD operating on a NSTR link pair), and apparatus 620, as MLD 120 (e.g., an AP MLD), is provided below. It is noteworthy that, although the example implementations described below are provided in the context of WLAN, the same may be implemented in other types of networks. It is also noteworthy that, although examples described below are provide in the context of apparatus 610, the examples may also be applicable to apparatus 620 or otherwise implemented by apparatus 620.

In one aspect pertaining to link availability indication for a non-primary link in wireless communications in accordance with the present disclosure, with apparatus 610 implementing a STA affiliated with an NSTR non-AP MLD (e.g., MLD 110) and apparatus 620 implementing an AP affiliated with an NSTR AP MLD (e.g., MLD 120), processor 622 may generate, as a first AP affiliated with apparatus 620 and operating on an NSTR link pair comprising a primary link and a non-primary link, a beacon frame or probe response frame. Moreover, processor 622 may transmit, as the first AP and via transceiver 626, the beacon frame or probe response frame on a link that is not the non-primary link to indicate that a second AP affiliated with apparatus 620 and operating on the non-primary link is unavailable, quiet or disabled.

In some implementations, the first AP may transmit the beacon frame or probe response frame on the primary link of the NSTR link pair. In such cases, the beacon frame or probe response frame may indicate that the second AP is unavailable, quiet or disabled in reference to a TBTT of the first AP as a reporting AP. In some implementations, an Unavailability/Quiet IE carried in the beacon frame or probe response frame may indicate that the second AP is unavailable, quiet or disabled. Moreover, a BSS parameter change count in a common information field of a multi-link element carried in the Unavailability/Quiet IE may be incremented to denote inclusion of the Unavailability/Quiet IE in the beacon frame or probe response frame as a critical update.

In some implementations, the first AP may transmit the beacon frame or probe response frame on an STR link. In such cases, the beacon frame or probe response frame may indicate that the second AP is unavailable, quiet or disabled in reference to a TBTT of the first AP as a reporting AP or another AP affiliated with the AP MLD and operating on the primary link. In some implementations, an Unavailability/Quiet IE included in a per-STA profile sub-element corresponding to the second AP and carried in a multi-link element in the beacon frame or probe response frame may indicate that the second AP is unavailable, quiet or disabled. Moreover, a BSS parameter change count in a common information field of a multi-link element carried in the Unavailability/Quiet IE may be incremented to denote inclusion of the Unavailability/Quiet IE in the beacon frame or probe response frame as a critical update.

Alternatively, a RNR element with a Neighbor AP Information field corresponding to the non-primary link carried in the beacon frame or probe response frame may indicate that the second AP is unavailable, quiet or disabled.

In another aspect pertaining to link availability indication for a non-primary link in wireless communications in accordance with the present disclosure, with apparatus 610 implementing a STA affiliated with an NSTR non-AP MLD (e.g., MLD 110) and apparatus 620 implementing an AP affiliated with an NSTR AP MLD (e.g., MLD 120), processor 622 may schedule, as a first AP affiliated with apparatus 620 and operating on a primary link of an NSTR link pair comprising the primary link and a non-primary link, one or more quiet intervals. Additionally, processor 622 may transmit, as the first AP and via transceiver 626, one or more beacon frames or probe response frames on the primary link to indicate the scheduling of the one or more quiet intervals for at least a second AP affiliated with apparatus 620 and operating on the non-primary link.

In some implementations, in response to the one or more quiet intervals being scheduled for both the first AP and the second AP, a Quiet element carried in the one or more beacon frames or probe response frames may indicate the scheduling of the one or more quiet intervals for the first AP and the second AP.

In some implementations, in response to the one or more quiet intervals being scheduled for the second AP but not the first AP, a Quiet element carried in a per-STA profile sub-element corresponding to the second AP in a Basic Variant multi-link element in the one or more beacon frames or probe response frames may indicate the scheduling of the one or more quiet intervals for the second AP.

In some implementations, in response the one or more quiet intervals scheduled for the second AP may be in reference to a most recent TBTT and a BI indicated in one or more corresponding elements of the first AP.

In some implementations processor 622 may perform additional operations. For instance, processor 622 may receive, as the first AP via transceiver 626, an association request frame or re-association request frame on the primary link from a STA affiliated with apparatus 610 as a non-AP MLD and capable of operating on the NSTR link pair. Furthermore, processor 622 may transmit, as the first AP and via transceiver 626, an association response frame or re-association response frame on the primary link to the STA to establish a multi-link setup with the STA responsive to receiving the association request frame or re-association request frame.

In some implementations, a Quiet element carried in a per-STA profile sub-element corresponding to the second AP in the association response frame or re-association response frame may indicate that the one or more quiet intervals on the non-primary link have been scheduled (e.g., have started).

### Illustrative Processes

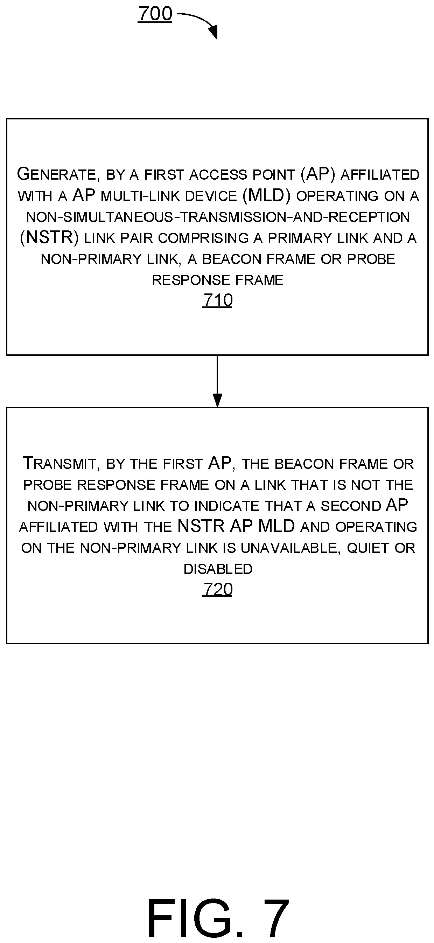

FIG. 7 illustrates an example process 700 in accordance with an embodiment of the present disclosure. Process 700 may represent an aspect of implementing various proposed designs, concepts, schemes, systems and methods described above. More specifically, process 700 may represent an aspect of the proposed concepts and schemes pertaining to link availability indication for a non-primary link in wireless communications in accordance with the present disclosure. Although illustrated as discrete blocks, various blocks of process 700 may be divided into additional blocks, combined into fewer blocks, or eliminated, depending on the desired implementation. Moreover, the blocks/sub-blocks of process 700 may be executed in the order shown in FIG. 7 or, alternatively in a different order. Furthermore, one or more of the blocks/sub-blocks of process 700 may be executed repeatedly or iteratively. Process 700 is implemented by apparatus 620 as well as any variations thereof. Solely for illustrative purposes and without limiting the scope, process 700 is described below in the context of apparatus 610 implemented in or as MLD 120 of a wireless network such as a WLAN in network environment 100 in accordance with one or more of IEEE 802.11 standards. Process 700 is implemented in the context of apparatus 620 implementing an AP affiliated with an NSTR AP MLD (e.g., MLD 120).

At 710, process 700 involves processor 622 generating, as a first AP affiliated with apparatus 620 and operating on an NSTR link pair comprising a primary link and a non-primary link, a beacon frame or probe response frame.

At 720, process 700 involves processor 622 transmitting, as the first AP and via transceiver 626, the beacon frame or probe response frame on a link that is not the non-primary link to indicate that a second AP affiliated with apparatus 620 and operating on the non-primary link is unavailable, quiet or disabled.

In some implementations, the first AP may transmit the beacon frame or probe response frame on the primary link of the NSTR link pair. In such cases, the beacon frame or probe response frame may indicate that the second AP is unavailable, quiet or disabled in reference to a TBTT of the first AP as a reporting AP. In some implementations, an Unavailability/Quiet IE carried in the beacon frame or probe response frame may indicate that the second AP is unavailable, quiet or disabled. Moreover, a BSS parameter change count in a common information field of a multi-link element carried in the Unavailability/Quiet IE may be incremented to denote inclusion of the Unavailability/Quiet IE in the beacon frame or probe response frame as a critical update.

In some implementations, the first AP may transmit the beacon frame or probe response frame on an STR link. In such cases, the beacon frame or probe response frame may indicate that the second AP is unavailable, quiet or disabled in reference to a TBTT of the first AP as a reporting AP or another AP affiliated with the AP MLD and operating on the primary link. In some implementations, an Unavailability/Quiet IE included in a per-STA profile sub-element corresponding to the second AP and carried in a multi-link element in the beacon frame or probe response frame may indicate that the second AP is unavailable, quiet or disabled. Moreover, a BSS parameter change count in a common information field of a multi-link element carried in the Unavailability/Quiet IE may be incremented to denote inclusion of the Unavailability/Quiet IE in the beacon frame or probe response frame as a critical update.

Alternatively, a RNR element with a Neighbor AP Information field corresponding to the non-primary link carried in the beacon frame or probe response frame may indicate that the second AP is unavailable, quiet or disabled.

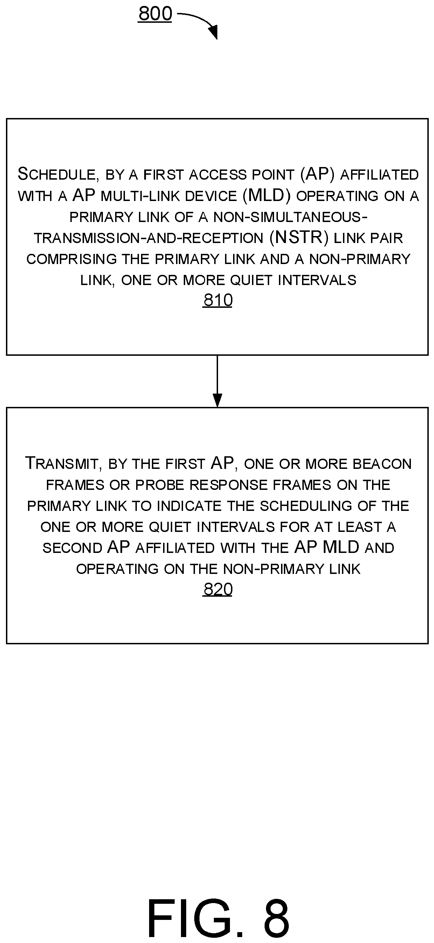

FIG. 8 illustrates an example process 800 in accordance with an embodiment of the present disclosure. Process 800 may represent an aspect of implementing various proposed designs, concepts, schemes, systems and methods described above. More specifically, process 800 may represent an aspect of the proposed concepts and schemes pertaining to link availability indication for a non-primary link in wireless communications in accordance with the present disclosure. Although illustrated as discrete blocks, various blocks of process 800 may be divided into additional blocks, combined into fewer blocks, or eliminated, depending on the desired implementation. Moreover, the blocks/sub-blocks of process 800 may be executed in the order shown in FIG. 8 or, alternatively in a different order. Furthermore, one or more of the blocks/sub-blocks of process 800 may be executed repeatedly or iteratively. Process 800 is implemented by or in apparatus 620 as well as any variations thereof. Process 800 is described below in the context of apparatus 620 implemented in or as MLD 120 of a wireless network such as a WLAN in network environment 100 in accordance with one or more of IEEE 802.11 standards. Process 800 is implemented in the context of apparatus 620 implementing an AP affiliated with an NSTR AP MLD (e.g., MLD 120).

At 810, process 800 involves processor 622 scheduling, as a first AP affiliated with apparatus 620 and operating on a primary link of an NSTR link pair comprising the primary link and a non-primary link, one or more quiet intervals.

At 820, process 800 involves processor 622 transmitting, as the first AP and via transceiver 626, one or more beacon frames or probe response frames on a link that is not the primary link to indicate the scheduling of the one or more quiet intervals for at least a second AP affiliated with apparatus 620 and operating on the non-primary link.

In some implementations, in response to the one or more quiet intervals being scheduled for both the first AP and the second AP, a Quiet element carried in the one or more beacon frames or probe response frames may indicate the scheduling of the one or more quiet intervals for the first AP and the second AP.

In some implementations, in response to the one or more quiet intervals being scheduled for the second AP but not the first AP, a Quiet element carried in a per-STA profile sub-element corresponding to the second AP in a Basic Variant multi-link element in the one or more beacon frames or probe response frames may indicate the scheduling of the one or more quiet intervals for the second AP.

In some implementations, in response the one or more quiet intervals scheduled for the second AP may be in reference to a most recent TBTT and a BI indicated in one or more corresponding elements of the first AP.

In some implementations, process 800 may involve processor 622 performing additional operations. For instance, process 800 may involve processor 622 receiving, as the first AP via transceiver 626, an association request frame or re-association request frame on the primary link from a STA affiliated with apparatus 610 as a non-AP MLD and capable of operating on the NSTR link pair. Furthermore, process 800 may involve processor 622 transmitting, as the first AP and via transceiver 626, an association response frame or re-association response frame on the primary link to the STA to establish a multi-link setup with the STA responsive to receiving the association request frame or re-association request frame.

In some implementations, a Quiet element carried in a per-STA profile sub-element corresponding to the second AP in the association response frame or re-association response frame may indicate that the one or more quiet intervals on the non-primary link have been scheduled (e.g., have started).

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration.

## Claims

1. A method, comprising:
generating (710), by a first access point, in the following also referred to as AP, affiliated with a AP multi-link device, in the following also referred to as MLD, a beacon frame or probe response frame, wherein the AP MLD is operating on a non-simultaneous-transmission-and-reception, in the following also referred to as NSTR, link pair comprising a primary link and a non-primary link, and the first AP operates on the primary link; and
transmitting (720), by the first AP, the beacon frame or probe response frame on a link that is not the non-primary link to indicate that a second AP affiliated with the AP MLD and operating on the non-primary link is unavailable, quiet or disabled.

2. An apparatus (620) implementable in an access point, in the following also referred to as AP, multi-link device, in the following also referred to as MLD,
the apparatus comprising:
a transceiver (626) configured to communicate wirelessly; and
a processor (622) coupled to the transceiver (626) and configured to perform operations as a first AP on a primary link and a second AP on a non-primary link of a non-simultaneous-transmission-and-reception, in the following also referred to as NSTR, link pair, respectively, the operations comprising:
generating, as the first AP, a beacon frame or probe response frame; and
transmitting, as the first AP and via the transceiver (626), the beacon frame or probe response frame on a link that is not the non-primary link to indicate that a second AP affiliated with the NSTR AP MLD and operating on the non-primary link is unavailable, quiet or disabled.

3. The method of Claim 1, or the apparatus of Claim 2, wherein the first AP transmits the beacon frame or probe response frame on the primary link of the NSTR link pair, and wherein the beacon frame or probe response frame indicates that the second AP is unavailable, quiet or disabled in reference to a target beacon transmission time, in the following also referred to as TBTT, of the first AP as a reporting AP.

4. The method or the apparatus of Claim 3, wherein an Unavailability/Quiet information element, IE, carried in the beacon frame or probe response frame indicates that the second AP is unavailable, quiet or disabled.

5. The method of any one of Claims 1, 3 and 4, wherein a Reduced Neighbor Report, in the following also referred to as RNR, element with a Neighbor AP Information field carried in the beacon frame or probe response frame indicates that the second AP is unavailable, quiet or disabled; or
the apparatus of any one of Claims 2 to 4, wherein an RNR element with a Neighbor AP Information field corresponding to the non-primary link carried in the beacon frame or probe response frame indicates that the second AP is unavailable, quiet or disabled,
wherein preferably the second AP is unavailable, quiet or disabled under at least one of conditions comprising:
no downlink or uplink traffic is mapping to the link on which the second AP is operating, and
a Quiet element corresponding to the second AP is carried in the beacon frame or probe response frame.

6. The method of any one of Claims 1 and 3 to 5, or the apparatus of any one of Claims 2 to 5, wherein the first AP transmits the beacon frame or probe response frame on a simultaneous-transmission-and-reception, in the following also referred to as STR, link, and wherein the beacon frame or probe response frame indicates that the second AP is unavailable, quiet or disabled in reference to a TBTT of the first AP as a reporting AP or another AP affiliated with the AP MLD and operating on the primary link.

7. The method or the apparatus of Claim 6, wherein an Unavailability/Quiet information element IE included in a per-station, in the following also referred to as per-STA, profile sub-element corresponding to the second AP and carried in a multi-link element in the beacon frame or probe response frame indicates that the second AP is unavailable, quiet or disabled.

8. The method or the apparatus of Claim 4, of Claim 5 in combination with Claim 4, or of Claim 7, wherein a basic service set, in the following also referred to as BSS, parameter change count in a common information field of a multi-link element carried in the Unavailability/Quiet IE is incremented to denote inclusion of the Unavailability/Quiet IE in the beacon frame or probe response frame as a critical update.

9. A method, comprising:
scheduling (810), by a first access point, in the following also referred to as AP, affiliated with a AP multi-link device, in the following also referred to as MLD, one or more quiet intervals, wherein the AP MLD is operating on a non-simultaneous-transmission-and-reception, in the following also referred to as NSTR, link pair comprising a primary link and a non-primary link, and the first AP operates on the primary link; and
transmitting (820), by the first AP, one or more beacon frames or probe response frames to indicate the scheduling of the one or more quiet intervals for at least a second AP affiliated with the AP MLD and operating on the non-primary link, wherein the one or more beacon frames or probe response frame are transmitted on a link that is not the non-primary link.

10. The method of Claim 9, wherein, responsive to the one or more quiet intervals being scheduled for both the first AP and the second AP, a Quiet element carried in the one or more beacon frames or probe response frames indicates the scheduling of the one or more quiet intervals for the first AP and the second AP; and/or
wherein, responsive to the one or more quiet intervals being scheduled for the second AP but not the first AP, a Quiet element carried in a per-station, in the following also referred to as per-STA, profile sub-element corresponding to the second AP in a Basic Variant multi-link element in the one or more beacon frames or probe response frames indicates the scheduling of the one or more quiet intervals for the second AP.

11. The method of Claim 9 or 10, wherein the one or more quiet intervals scheduled for the second AP are in reference to a most recent target beacon transmission time, in the following also referred to as TBTT, and a beacon interval, in the following also referred to as BI, indicated in one or more corresponding elements of the first AP.

12. The method of any one of Claims 9 to 11, further comprising:
receiving, by the first AP, an association request frame or re-association request frame on the primary link from a station, in the following also referred to as STA, affiliated with a non-AP MLD; and
transmitting, by the first AP, an association response frame or re-association response frame on the primary link to the STA to establish a multi-link setup with the STA responsive to receiving the association request frame or re-association request frame.

13. The method of Claim 12, wherein a Quiet element carried in a per-station, in the following also referred to as per-STA, profile sub-element corresponding to the second AP in the association response frame or re-association response frame indicates that the one or more quiet intervals on the non-primary link have been scheduled.

14. An apparatus (620) implementable in an access point, in the following also referred to as AP, multi-link device, in the following also referred to as MLD, comprising:
a transceiver (626) configured to communicate wirelessly; and
a processor (622) coupled to the transceiver (626) and configured to perform the method steps as defined in any of claims 9 to 13.

## Patentansprüche

1. Verfahren, umfassend:
Erzeugen (710), durch einen ersten Zugangspunkt, im Folgenden auch als AP bezeichnet, der mit einer AP-Mehrfachverbindungsvorrichtung, im Folgenden auch als MLD bezeichnet, verbunden ist, eines Beacon-Rahmens oder Probe-Response-Rahmens, wobei die AP-MLD auf einem nicht-gleichzeitiges-Sende-und-Empfang, im Folgenden auch als NSTR bezeichnet, -Verbindungspaar arbeitet, das eine primäre Verbindung und eine nicht-primäre Verbindung umfasst, und der erste AP auf der primären Verbindung arbeitet; und
Senden (720), durch den ersten AP, des Beacon-Rahmens oder Probe-Response-Rahmens auf einer Verbindung, die nicht die nicht-primäre Verbindung ist, um anzuzeigen, dass ein zweiter AP, der mit der AP-MLD verbunden ist und auf der nicht-primären Verbindung arbeitet, nicht verfügbar, ruhig oder deaktiviert ist.

2. Vorrichtung (620), die in einer Zugangspunkt-, im Folgenden auch als AP bezeichnet, Mehrfachverbindungsvorrichtung, im Folgenden auch als MLD bezeichnet, implementierbar ist, wobei die Vorrichtung umfasst:
einen Transceiver (626), der konfiguriert ist, drahtlos zu kommunizieren; und
einen Prozessor (622), der mit dem Transceiver (626) gekoppelt und konfiguriert ist, Operationen als ein erster AP auf einer primären Verbindung bzw. ein zweiter AP auf einer nicht-primären Verbindung eines nicht-gleichzeitiges-Sende-und-Empfang, im Folgenden auch als NSTR bezeichnet, -Verbindungspaars durchzuführen, wobei die Operationen umfassen:
Erzeugen, als der erste AP, eines Beacon-Rahmens oder Probe-Response-Rahmens; und
Senden, als der erste AP und über den Transceiver (626), des Beacon-Rahmens oder Probe-Response-Rahmens auf einer Verbindung, die nicht die nicht-primäre Verbindung ist, um anzuzeigen, dass ein zweiter AP, der mit der NSTR-AP-MLD verbunden ist und auf der nicht-primären Verbindung arbeitet, nicht verfügbar, ruhig oder deaktiviert ist.

3. Verfahren nach Anspruch 1 oder Vorrichtung nach Anspruch 2, wobei der erste AP den Beacon-Rahmen oder Probe-Response-Rahmen auf der primären Verbindung des NSTR-Verbindungspaars sendet, und wobei der Beacon-Rahmen oder Probe-Response-Rahmen anzeigt, dass der zweite AP in Bezug auf eine Ziel-Beacon-Sendezeit, im Folgenden auch als TBTT bezeichnet, des ersten AP als berichtenden AP nicht verfügbar, ruhig oder deaktiviert ist.

4. Verfahren oder Vorrichtung nach Anspruch 3, wobei ein Nicht-Verfügbarkeit/Ruhig-Informationselement, IE, das in dem Beacon-Rahmen oder Probe-Response-Rahmen übertragen wird, anzeigt, dass der zweite AP nicht verfügbar, ruhig oder deaktiviert ist.

5. Verfahren nach einem der Ansprüche 1, 3 und 4, wobei ein Reduced-Neighbor-Report, im Folgenden auch als RNR bezeichnet, -Element mit einem Neighbor-AP-Informationsfeld, das in dem Beacon-Rahmen oder Probe-Response-Rahmen übertragen wird, anzeigt, dass der zweite AP nicht verfügbar, ruhig oder deaktiviert ist; oder
Vorrichtung nach einem der Ansprüche 2 bis 4, wobei ein RNR-Element mit einem Neighbor-AP-Informationsfeld, das zu der nicht-primären Verbindung korrespondiert, das in dem Beacon-Rahmen oder Probe-Response-Rahmen übertragen wird, anzeigt, dass der zweite AP nicht verfügbar, ruhig oder deaktiviert ist;
wobei vorzugsweise der zweite AP unter mindestens einer der Bedingungen nicht verfügbar, ruhig oder deaktiviert ist, umfassend:
kein Downlink- oder Uplink-Verkehr wird auf die Verbindung abgebildet, auf der der zweite AP arbeitet, und
ein Ruhig-Element, das zu dem zweiten AP korrespondiert, wird in dem Beacon-Rahmen oder Probe-Response-Rahmen übertragen.

6. Verfahren nach einem der Ansprüche 1 und 3 bis 5 oder Vorrichtung nach einem der Ansprüche 2 bis 5, wobei der erste AP den Beacon-Rahmen oder Probe-Response-Rahmen auf einer gleichzeitiges-Sende-und-Empfang, im Folgenden auch als STR bezeichnet, -Verbindung sendet, und wobei der Beacon-Rahmen oder Probe-Response-Rahmen anzeigt, dass der zweite AP in Bezug auf eine TBTT des ersten AP als berichtenden AP oder eines anderen AP, der mit der AP-MLD verbunden ist und auf der primären Verbindung arbeitet, nicht verfügbar, ruhig oder deaktiviert ist.

7. Verfahren oder Vorrichtung nach Anspruch 6, wobei ein Nicht-Verfügbarkeit/Ruhig-Informationselement, IE, das in einem Pro-Station, im Folgenden auch als Pro-STA bezeichnet, -Profilunterelement enthalten ist, das zu dem zweiten AP korrespondiert und in einem Mehrfachverbindungselement in dem Beacon-Rahmen oder Probe-Response-Rahmen übertragen wird, anzeigt, dass der zweite AP nicht verfügbar, ruhig oder deaktiviert ist.

8. Verfahren oder Vorrichtung nach Anspruch 4, nach Anspruch 5 in Kombination mit Anspruch 4 oder nach Anspruch 7, wobei ein Basic-Service-Set, im Folgenden auch als BSS bezeichnet, -Parameteränderungszählwert in einem gemeinsamen Informationsfeld eines Mehrfachverbindungselements, das in dem Nicht-Verfügbarkeit/Ruhig-IE übertragen wird, inkrementiert wird, um die Aufnahme des Nicht-Verfügbarkeit/Ruhig-IE in den Beacon-Rahmen oder Probe-Response-Rahmen als eine kritische Aktualisierung anzuzeigen.

9. Verfahren, umfassend:
Planen (810), durch einen ersten Zugangspunkt, im Folgenden auch als AP bezeichnet, der mit einer AP- Mehrfachverbindungsvorrichtung, im Folgenden auch als MLD bezeichnet, verbunden ist, eines oder mehrerer ruhiger Intervalle, wobei die AP-MLD auf einem nicht-gleichzeitiges-Sende-und-Empfang, im Folgenden auch als NSTR bezeichnet, -Verbindungspaar arbeitet, das eine primäre Verbindung und eine nicht-primäre Verbindung umfasst, und der erste AP auf der primären Verbindung arbeitet; und
Senden (820), durch den ersten AP, eines oder mehrerer Beacon-Rahmen oder Probe-Response-Rahmen, um die Planung des einen oder der mehreren ruhigen Intervalle für mindestens einen zweiten AP anzuzeigen, der mit der AP-MLD verbunden ist und auf der nicht-primären Verbindung arbeitet, wobei der eine oder die mehreren Beacon-Rahmen oder Probe-Response-Rahmen auf einer Verbindung gesendet werden, die nicht die nicht-primäre Verbindung ist.

10. Verfahren nach Anspruch 9, wobei, als Reaktion darauf, dass das eine oder die mehreren ruhigen Intervalle sowohl für den ersten AP als auch den zweiten AP geplant werden, ein Ruhig-Element, das in dem einen oder den mehreren Beacon-Rahmen oder Probe-Response-Rahmen übertragen wird, die Planung des einen oder der mehreren ruhigen Intervalle für den ersten AP und den zweiten AP anzeigt; und/oder
wobei, als Reaktion darauf, dass das eine oder die mehreren ruhigen Intervalle für den zweiten AP, aber nicht den ersten AP geplant werden, ein Ruhig-Element, das in einem Pro-Station, im Folgenden auch als Pro-STA bezeichnet, - Profilunterelement übertragen wird, das zu dem zweiten AP in einem Basic-Variant-Mehrfachverbindungselement in dem einen oder den mehreren Beacon-Rahmen oder Probe-Response-Rahmen korrespondiert, die Planung des einen oder der mehreren ruhigen Intervalle für den zweiten AP anzeigt.

11. Verfahren nach Anspruch 9 oder 10, wobei das eine oder die mehreren ruhigen Intervalle, die für den zweiten AP geplant werden, in Bezug auf eine jüngste Ziel-Beacon-Sendezeit, im Folgenden auch als TBTT bezeichnet, und ein Beacon-Intervall, im Folgenden auch als BI bezeichnet, sind, das in einem oder mehreren korrespondierenden Elementen des ersten AP angezeigt wird.

12. Verfahren nach einem der Ansprüche 9 bis 11, ferner umfassend:
Empfangen, durch den ersten AP, eines Assoziationsanforderungsrahmens oder Neuassoziationsanforderungsrahmens auf der primären Verbindung von einer Station, im Folgenden auch als STA bezeichnet, die mit einer Nicht-AP-MLD verbunden ist; und
Senden, durch den ersten AP, eines Assoziationsantwortrahmens oder Neuassoziationsantwortrahmens auf der primären Verbindung an die STA, um eine Mehrfachverbindungseinrichtung mit der STA als Reaktion auf das Empfangen des Assoziationsanforderungsrahmens oder Neuassoziationsanforderungsrahmens herzustellen.

13. Verfahren nach Anspruch 12, wobei ein Ruhig-Element, das in einem Pro-Station, im Folgenden auch als Pro-STA bezeichnet, -Profilunterelement, das zu dem zweiten AP korrespondiert, in dem Assoziationsantwortrahmen oder Neuassoziationsantwortrahmen übertragen wird, anzeigt, dass das eine oder die mehreren ruhigen Intervalle auf der nicht-primären Verbindung geplant wurden.

14. Vorrichtung (620), die in einer Zugangspunkt- , im Folgenden auch als AP bezeichnet, Mehrfachverbindungsvorrichtung, im Folgenden auch als MLD bezeichnet, implementierbar ist, umfassend:
einen Transceiver (626), der konfiguriert ist, drahtlos zu kommunizieren; und
einen Prozessor (622), der mit dem Transceiver (626) gekoppelt und konfiguriert ist, die in einem der Ansprüche 9 bis 13 definierten Verfahrensschritte durchzuführen.

## Revendications

1. Procédé, comprenant :
la génération (710), par un premier point d'accès, ci-après également appelé AP, affilié à un dispositif à liaisons multiples, ci-après également appelé MLD, d'AP d'une trame de balise ou d'une trame de réponse de sondage, dans lequel le MLD d'AP fonctionne sur une paire de liaisons de transmission et de réception non simultanées, ci-après également appelée NSTR, comprenant une liaison primaire et une liaison non primaire, et le premier AP fonctionne sur la liaison primaire ; et
la transmission (720), par le premier AP, de la trame de balise ou de la trame de réponse de sondage sur une liaison qui n'est pas la liaison non primaire pour indiquer qu'un second AP affilié au MLD d'AP et fonctionnant sur la liaison non primaire est indisponible, silencieux ou désactivé.

2. Appareil (620) pouvant être mis en œuvre dans un dispositif à liaisons multiples, ci-après également appelé MLD, de point d'accès, ci-après également appelé AP, l'appareil comprenant :
un émetteur-récepteur (626) configuré pour communiquer sans fil ; et
un processeur (622) couplé à l'émetteur-récepteur (626) et configuré pour effectuer des opérations en tant que premier AP sur une liaison primaire et second AP sur une liaison non primaire d'une paire de liaisons de transmission et de réception non simultanées, ci-après également appelée NSTR, respectivement, les opérations comprenant :
la génération, en tant que premier AP, d'une trame de balise ou d'une trame de réponse de sondage ; et
la transmission, en tant que premier AP et via l'émetteur-récepteur (626), de la trame de balise ou de la trame de réponse de sondage sur une liaison qui n'est pas la liaison non primaire pour indiquer qu'un second AP affilié au MLD d'AP NSTR et fonctionnant sur la liaison non primaire est indisponible, silencieux ou désactivé.

3. Procédé selon la revendication 1, ou appareil selon la revendication 2, dans lequel le premier AP transmet la trame de balise ou la trame de réponse de sondage sur la liaison primaire de la paire de liaisons NSTR, et dans lequel la trame de balise ou la trame de réponse de sondage indique que le second AP est indisponible, silencieux ou désactivé en référence à un temps de transmission de balise cible, ci-après également appelé TBTT, du premier AP en tant qu'AP de rapport.

4. Procédé ou appareil selon la revendication 3, dans lequel un élément d'information, IE, d'indisponibilité/silencieux porté dans la trame de balise ou la trame de réponse de sondage indique que le second AP est indisponible, silencieux ou désactivé.

5. Procédé selon l'une quelconque des revendications 1, 3 et 4, dans lequel un élément de rapport de voisinage réduit, ci-après également appelé RNR, avec un champ d'information d'AP voisin porté dans la trame de balise ou la trame de réponse de sondage indique que le second AP est indisponible, silencieux ou désactivé ; ou
appareil selon l'une quelconque des revendications 2 à 4, dans lequel un élément RNR avec un champ d'information d'AP voisin correspondant à la liaison non primaire porté dans la trame de balise ou la trame de réponse de sondage indique que le second AP est indisponible, silencieux ou désactivé ;
dans lequel de préférence le second AP est indisponible, silencieux ou désactivé dans au moins l'une des conditions comprenant :
aucun trafic de liaison descendante ou de liaison montante n'est mis en correspondance avec la liaison sur laquelle le second AP fonctionne, et
un élément silencieux correspondant au second AP est porté dans la trame de balise ou la trame de réponse de sondage.

6. Procédé selon l'une quelconque des revendications 1 et 3 à 5, ou appareil selon l'une quelconque des revendications 2 à 5, dans lequel le premier AP transmet la trame de balise ou la trame de réponse de sondage sur une liaison de transmission et de réception simultanées, ci-après également appelée STR, et dans lequel la trame de balise ou la trame de réponse de sondage indique que le second AP est indisponible, silencieux ou désactivé en référence à un TBTT du premier AP en tant qu'AP de rapport ou un autre AP affilié au MLD d'AP et fonctionnant sur la liaison primaire.

7. Procédé ou appareil selon la revendication 6, dans lequel un élément d'information, IE, d'indisponibilité/silencieux inclus dans un sous-élément de profil par station, ci-après également appelé par STA, correspondant au second AP et porté dans un élément à liaisons multiples dans la trame de balise ou la trame de réponse de sondage indique que le second AP est indisponible, silencieux ou désactivé.

8. Procédé ou appareil selon la revendication 4, selon la revendication 5 en combinaison avec la revendication 4, ou selon la revendication 7, dans lequel un compte de changement de paramètre d'ensemble de services de base, ci-après également appelé BSS, dans un champ d'information commun d'un élément à liaisons multiples porté dans l'IE d'indisponibilité/silencieux est incrémenté pour indiquer l'inclusion de l'IE d'indisponibilité/silencieux dans la trame de balise ou la trame de réponse de sondage en tant que mise à jour critique.

9. Procédé, comprenant :
la planification (810), par un premier point d'accès, ci-après également appelé AP, affilié à un dispositif à liaisons multiples, ci-après également appelé MLD, d'AP, d'un ou plusieurs intervalles silencieux, dans lequel le MLD d'AP fonctionne sur une paire de liaisons de transmission et de réception non simultanées, ci-après également appelée NSTR, comprenant une liaison primaire et une liaison non primaire, et le premier AP fonctionne sur la liaison primaire ; et
la transmission (820), par le premier AP, d'une ou plusieurs trames de balise ou trames de réponse de sondage pour indiquer la planification des un ou plusieurs intervalles silencieux pour au moins un second AP affilié au MLD d'AP et fonctionnant sur la liaison non primaire, dans lequel les une ou plusieurs trames de balise ou trames de réponse de sondage sont transmises sur une liaison qui n'est pas la liaison non primaire.

10. Procédé selon la revendication 9, dans lequel, en réponse aux un ou plusieurs intervalles silencieux qui sont planifiés à la fois pour le premier AP et le second AP, un élément silencieux porté dans les une ou plusieurs trames de balise ou trames de réponse de sondage indique la planification des un ou plusieurs intervalles silencieux pour le premier AP et le second AP ; et/ou
dans lequel, en réponse aux un ou plusieurs intervalles silencieux qui sont planifiés pour le second AP mais pas le premier AP, un élément silencieux porté dans un sous-élément de profil par station, ci-après également appelé par STA, correspondant au second AP dans un élément à liaisons multiples de variante de base dans les une ou plusieurs trames de balise ou trames de réponse de sondage indique la planification des un ou plusieurs intervalles silencieux pour le second AP.

11. Procédé selon la revendication 9 ou 10, dans lequel les un ou plusieurs intervalles silencieux planifiés pour le second AP sont en référence à un temps de transmission de balise cible le plus récent, ci-après également appelé TBTT, et un intervalle de balise, ci-après également appelé BI, indiqué dans un ou plusieurs éléments correspondants du premier AP.

12. Procédé selon l'une quelconque des revendications 9 à 11, comprenant en outre :
la réception, par le premier AP, d'une trame de demande d'association ou d'une trame de demande de réassociation sur la liaison primaire à partir d'une station, ci-après également appelée STA, affiliée à un MLD non-AP ; et
la transmission, par le premier AP, d'une trame de réponse d'association ou d'une trame de réponse de réassociation sur la liaison primaire à la STA pour établir un établissement de liaisons multiples avec la STA en réponse à la réception de la trame de demande d'association ou de la trame de demande de réassociation.

13. Procédé selon la revendication 12, dans lequel un élément silencieux porté dans un sous-élément de profil par station, ci-après également appelé par STA, correspondant au second AP dans la trame de réponse d'association ou la trame de réponse de réassociation indique que les un ou plusieurs intervalles silencieux sur la liaison non primaire ont été planifiés.

14. Appareil (620) pouvant être mis en œuvre dans un dispositif à liaisons multiples, ci-après également appelé MLD, de point d'accès, ci-après également appelé AP, comprenant :
un émetteur-récepteur (626) configuré pour communiquer sans fil ; et
un processeur (622) couplé à l'émetteur-récepteur (626) et configuré pour effectuer les étapes de procédé telles que définies dans l'une quelconque des revendications 9 à 13.
